# EUROPÄISCHE PATENTSCHRIFT

(11) **EP 2 283 901 B1**
(45) Veröffentlichungstag und Bekanntmachung des Hinweises auf die Patenterteilung: **02.01.2013**
(21) Anmeldenummer: 09010514.9
(22) Anmeldetag: 14.08.2009
(51) Int. Cl.: A62B 23/02, A41D 13/11

(54) **Filtermaterial und Atemschutzmaske**
Filter material and respirator mask
Matériau de filtre et masque de protection respiratoire

(43) Veröffentlichungstag der Anmeldung: 16.02.2011
(73) Patentinhaber: Moldex-Metric AG & Co. KG, 72141 Walddorfhäslach (DE)
(72) Erfinder: Kern, Frank, 72124 Pliezhausen (DE)
(74) Vertreter: Grünecker, Kinkeldey, Stockmair & Schwanhäusser

(56) Entgegenhaltungen:
- DE-U1- 9 319 372
- DE-U1- 29 815 881

## Beschreibung

Die Erfindung bezieht sich auf ein Filtermaterial gemäß dem Oberbegriff des Anspruchs 1, sowie auf eine mit solch einem Filtermaterial ausgestattete Atemschutzmaske.

Ein gattungsgemäßes Filtermaterial und eine damit ausgerüstete Atemschutzmaske sind aus der DE 93 19 372 U1 bekannt. Ein weiteres Filtermaterial und eine damit gefilterte Atemschutzmaske sind aus der DE 298 15 881 U1 bekannt. Dabei weist die in Falten gelegte Filtermateriallage drei Schichten auf: eine netzartige Stabilisierungsschicht, eine mittlere Filterschicht und eine Deckschicht aus einem Spinnvlies, die in dieser Reihenfolge übereinander angeordnet sind.

Atemschutzmasken und dafür vorgesehene Filtermaterialien sind einer Vielzahl von sich zum Teil widersprechenden Anforderungen ausgesetzt. Primäres Ziel ist hier immer der sichere Schutz der Atemluft vor Staub und anderen Verunreinigungen. Für den Tragekomfort ist es jedoch wichtig, dass sich die Maske eng an das Gesicht des Trägers anschmiegt, und dass insbesondere die Feuchtigkeit aus der ausgeatmeten Luft schnell genug aus dem Maskeninneren abtransportiert wird. Schließlich muss die Maske so stabil sein, dass sie unter Belastungen nicht zu schnell brüchig und damit durchlässig wird.

Es hat sich gezeigt, dass hinsichtlich der herkömmlichen Faltenfiltermaske noch Verbesserungspotential besteht, was das gleichzeitige Erfüllen all dieser Anforderungen angeht. Aufgabe der vorliegenden Erfindung ist es daher, mit konstruktiv möglichst einfachen Mitteln ein Filtermaterial und eine damit versehene Atemschutzmaske zur Verfügung zu stellen, die alle an sie gerichteten Anforderungen möglichst gut erfüllen.

Diese Aufgabe wird gelöst durch ein Filtermaterial mit den Merkmalen des Anspruchs 1, sowie durch eine Atemschutzmaske mit den Merkmalen des Anspruchs 10. Vorteilhafte Weiterbildungen der Erfindung sind in den Unteransprüchen angegeben.

Das erfindungsgemäße Filtermaterial zeichnet sich dadurch aus, dass die in Falten gelegte Filtermateriallage auf der der ersten Netzschicht gegenüberliegenden Seite der Filterschicht noch eine zweite Netzschicht aufweist. In dem herkömmlichen Filtermaterial verleiht bereits die erste Netzschicht dem in Falten gelegten Material die erforderliche Stabilität, so dass die Falten nicht in sich zusammenfallen. Es bestand somit kein Bedarf für eine zweite Netzschicht auf der gegenüberliegenden Seite der Filterschicht. Im Gegenteil musste sogar erwartet werden, dass der Luftdurchlasswiderstand höher wird, wenn eine weitere Netzschicht vorgesehen wird.

Überraschenderweise hat sich jedoch gezeigt, dass der Luftdurchlasswiderstand sogar erheblich abnimmt, wenn die zweite Netzschicht vorgesehen wird. Bei gegebener Geometrie der Falten kann der Luftwiderstand bei einer Anströmgeschwindigkeit von 95 l/min von 140 Pa auf 75 Pa abnehmen, d.h. um über 45 %. Bei gleichbleibender Leistung des Filters bedeutet dies einen enormen Komfortgewinn für den Träger einer mit dem Filtermaterial versehenen Atemschutzmaske, da der Träger mit weniger Mühe ein- und ausatmen kann. Vor allem unter starker körperlicher Belastung verringert dies Ermüdungserscheinungen des Trägers der Maske, was letztendlich auch seine Arbeitssicherheit und Leistungsfähigkeit entscheidend verbessert.

Vorzugsweise weist wenigstens eine der Netzschichten Ethylenvinylacetat (EVA) und/oder Polypropylen (PP) auf. Die Netzschichten können auch aus einer Mischung dieser beiden Materialien bestehen. Beide Materialien absorbieren keine Feuchtigkeit und sind sehr stabil.

Zweckmäßig ist es, wenn wenigstens eine der Netzschichten eine Grammatur im Bereich von 30 gr/m² bis 200 gr/m² aufweist. Ideal ist eine Grammatur im Bereich von 50 gr/m² bis 70 gr/m², insbesondere von 60 gr/m².

Vorzugsweise weist wenigstens eine der Netzschichten regelmäßige Maschen oder Netzstrukturen auf, beispielsweise rechteckige oder rautenförmige Netzstrukturen. Solche Netzstrukturen verleihen der Netzschicht und damit der gesamten Filtermateriallage eine hohe Stabilität, während sie gleichzeitig einen hohen Luftdurchlass erlauben.

Wenn die Netzstrukturen rautenförmig sind, kann die kürzer Diagonale der Netzstrukturen Abmessungen von 1,5 mm bis 4,0 mm haben, während die längere Diagonale der Netzstrukturen Abmessungen von 2,5 mm bis 6,0 mm hat. Noch besser ist es, wenn die kürzere Diagonale eine Länge im Bereich von 2,0 mm bis 3,0 mm hat, während die längere Diagonale eine Länge von 3,5 mm bis 4,5 mm hat.

Besondere Vorteile entfaltet das erfindungsgemäße Filtermaterial, wenn in den Falten zwei Lagen der Filtermateriallage unmittelbar aufeinander liegen. Bei dem herkömmlichen Material bedeutete dies, dass die entsprechenden Bereiche der Filterschicht wirkungslos wurden, weil nur ein geringer Luftaustausch zwischen der Innen- und der Außenseite der Filtermateriallage erfolgen konnte. Beim erfindungsgemäßen Material hingegen kann die Luft über die zweite Netzschicht seitlich abgeleitet werden, um von der Innenseite zur Außenseite des Filtermaterials zu gelangen. Das Aufeinanderliegen der Lagen der Filtermateriallage verringert also nicht mehr die effektive Filterfläche, sondern macht die vorhandene Fläche nutzbar.

Die Erfindung bezieht sich auch auf eine Atemschutzmaske mit einem schalenförmig ausgeformten Maskenkörper, der das erfindungsgemäße Filtermaterial enthält.

Wenn an den Falten des Filtermaterials zwei Lagen des Materials aufeinander liegen, sollte dies vorzugsweise auf der Außenseite der Falten geschehen. Auf diese Weise entstehen auf der Innenseite der Filtermateriallage Taschen zwischen benachbarten Falten, in die die Luft einströmen und in denen sich die Luft verteilen kann, so dass der Luftdurchlasswiderstand kleiner wird.

Solche Taschen entstehen insbesondere dann, wenn auf der Innenseite der Falten zwei benachbarte Lagen der Filtermateriallage voneinander beabstandet sind.

Auf ihrer Innenseite weist die Atemschutzmaske vorzugsweise ein Maskenvlies auf, beispielsweise aus PP. Auch die Filterschicht des Filtermaterials kann aus Polypropylen gebildet sein.

Im Folgenden wird ein vorteilhaftes Ausführungsbeispiel anhand einer Zeichnung näher erläutert. Im Einzelnen zeigen:
- Fig. 1: eine perspektivische Ansicht eines Ausschnitts aus einem erfindungsgemäßen Filtermaterial,
- Fig. 2: eine perspektivische Ansicht einer erfindungsgemäßen Atemschutzmaske, und
- Fig. 3: einen Vergleich des Einatemwiderstandes des erfindungsgemäßen Filtermate- rials mit herkömmlichen Materialien.

Gleiche Komponenten sind in den Figuren durchgängig mit gleichen Bezugszeichen versehen.

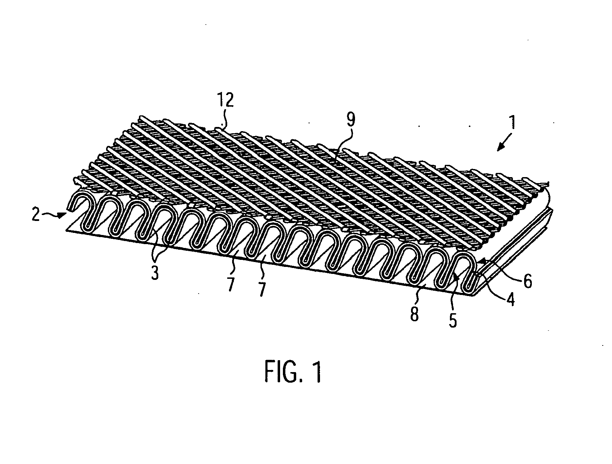

Fig. 1 zeigt in perspektivischer Ansicht ein erfindungsgemäßes Filtermaterial 1. Kernstück dieses Filtermaterials ist eine mehrschichtige Filtermateriallage 2, die in Falten 3 gelegt ist.

Zentrale Schicht dieser Filtermateriallage 2 ist eine beispielsweise aus Polypropylen (PP) bestehende Filterschicht 4. Sie dient dazu, den Durchgang von Staub oder anderen Partikeln durch die Filtermateriallage 2 zu verhindern, während gleichzeitig ein Austausch von Luft und gegebenenfalls Dampf ermöglicht wird.

Auf der später dem Maskeninneren zugewandten Seite der Filterschicht 4 befindet sich eine erste Netzschicht 5, während sich auf der gegenüberliegenden, d.h. äußeren Seite der Filterschicht 4 eine zweite Netzschicht 6 befindet. Beide Netzschichten können aus einer EVA-PP-Mischung gebildet sein. In einem Ausführungsbeispiel weisen sie rautenförmige Netzstrukturen auf, bei denen die Abmessungen der beiden Diagonalen 2,5 mm und 4,0 mm betragen. Im bevorzugten Ausführungsbeispiel hat jede Netzschicht eine Netzgrammatur von 60 gr/m².

Im dargestellten Ausführungsbeispiel liegen die benachbarten Lagen der Filtermateriallage 2 einseitig aneinander, nämlich auf ihrer Außenseite. Dazu sind die Falten 3 so ausgebildet, dass die benachbarten Lagen des Materials in einem linienförmigen oder sogar flächenförmigen Kontakt miteinander stehen. Dieser Kontakt entsteht zwischen zwei zueinander benachbarten Abschnitten der zweiten Netzschicht 6.

Auf der damit gebildeten Maskeninnenseite sind zwei benachbarte Lagen der Filtermateriallage 2 voneinander beabstandet. Auf diese Weise bildet sich zwischen zwei benachbarten Falten 3 eine Tasche 7, in die Luft von der Innenseite des Filtermaterials 1 einströmen kann.

Die Faltenbildung der Filtermateriallage 2 kann in der in der DE 298 15 881 U1 beschriebenen Weise erfolgen, vorzugsweise nach einer Erwärmung der Filtermateriallage. Nach dem Abkühlen behält die Filtermateriallage 2 die Faltenstruktur bei.

Um den Tragekomfort zu erhöhen, weist das Filtermaterial 1 auf der Innenseite ein durchgehendes Maskenvlies 8 auf. Dieses Maskenvlies 8 bildet eine glatte Oberfläche, die den Tragekomfort erhöht.

Auf der Außenseite der Filtermateriallage 2 befindet sich ein ebenfalls durchgehendes Maskengitter 9. Während das Maskenvlies aus Polypropylen besteht, besteht das Maskengitter 9 vorzugsweise aus einer EVA-PP-Mischung. Um die Stabilität des Filtermaterials 1 und insbesondere der Falten 3 zu erhöhen, und um ein Verrutschen der Filtermateriallage 2 im Filtermaterial 1 zu verhindern, können das Maskenvlies 8 und/oder das Maskengitter 9 mit der Filtermateriallage 2 verbunden sein. Da es sich bei allen Materialien um thermoplastisches Material handelt, können die Schichten durch einen thermischen Prozess, d.h. ein Anschmelzen oder Verschweißen, dauerhaft miteinander verbunden werden.

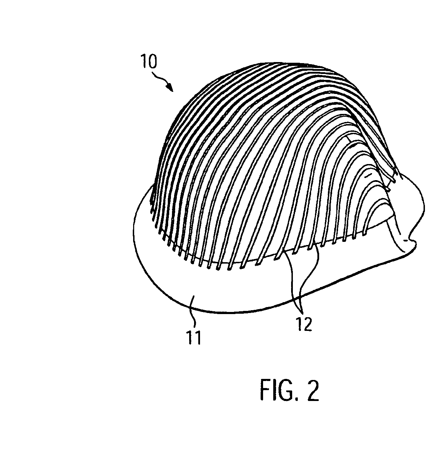

Fig. 2 zeigt eine erfindungsgemäße Atemschutzmaske 10, die aus dem Filtermaterial 1 gebildet ist. Das Filtermaterial 1 ist zu einem Maskenkörper 11 ausgeformt, der möglichst gut an die anatomische Form des Gesichts des Trägers angepasst ist. Auf der konvexen Außenseite des Maskenkörpers 11 sind die Längs-Stränge 12 des Maskengitters 9 zu erkennen. Der Übersichtlichkeit halber sind andere Komponenten der Atemschutzmaske 10 nicht dargestellt, beispielsweise ein Atemventil oder ein Gummizug zur Befestigung der Schutzmaske 10 am Kopf des Trägers.

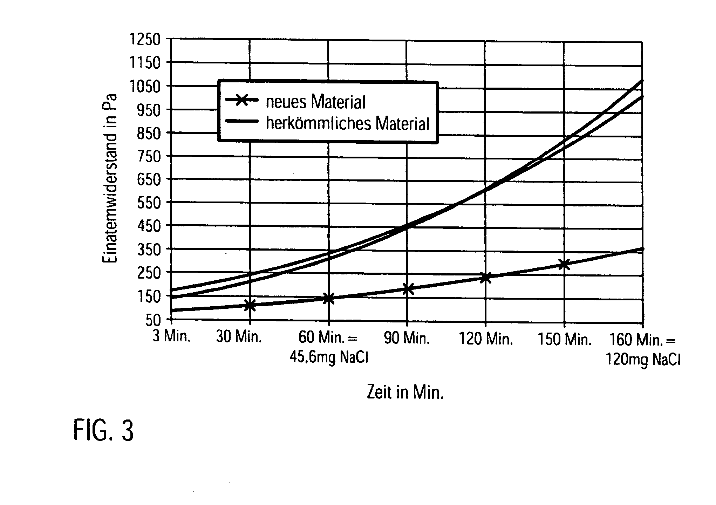

Fig. 3 zeigt einen Vergleich der Atemwiderstände des erfindungsgemäßen Filtermaterials 1 und herkömmlicher Materialien für Atemschutzmasken. Dabei ist die zeitliche Entwicklung des Einatemwiderstandes in Pa unter bestimmten Testbedingungen dargestellt. Zu sehen ist, dass der Einatemwiderstand des erfindungsgemäßen Filtermaterials 1 erheblich unter den Vergleichswerten der herkömmlichen Materialien liegt, so dass sich die zum Ein- und Ausatmen benötigte Kraft erheblich verringert. Trotzdem weist das erfindungsgemäße Filtermaterial pro Fläche eine deutlich größere nutzbare Fläche der Filterschicht 4 als beispielsweise das in zick-zack-förmige Falten gelegte Material gemäß DE 298 15 881 U1 auf. Diese vergrößerte nutzbare Filterfläche sorgt für eine deutlich erhöhte Einspeicher-Effizienz für Partikel. Folglich muss die Maske weniger häufig gewechselt werden als herkömmliche Masken.

Ausgehend von dem dargestellten Ausführungsbeispiel können das erfindungsgemäße Filtermaterial 1 und die erfindungsgemäße Atemschutzmaske 10 in vielfacher Hinsicht abgewandelt werden. Beispielsweise können andere Materialien für die unterschiedlichen Schichten gewählt werden, oder die Geometrie der Netzstrukturen kann verändert werden.

## Patentansprüche

1. Filtermaterial (1) für eine Atemschutzmaske mit einer in eine Mehrzahl von Falten (3) gelegten Filtermateriallage (2), wobei die Filtermateriallage (2) eine Filterschicht (4) und eine erste Netzschicht (5) aufweist, und wobei die Filtermateriallage (2) auf der der ersten Netzschicht (5) gegenüberliegenden Seite der Filterschicht (4) eine zweite Netzschicht (6) aufweist,
**dadurch gekennzeichnet, dass** in einer Falte (3) zwei benachbarte Lagen der Filtermateriallage (2) einseitig aufeinander liegen, so dass zwischen zwei benachbarten Falten (3) eine Tasche (7) gebildet ist.

2. Filtermaterial nach Anspruch 1, **dadurch gekennzeichnet, dass** wenigstens eine der Netzschichten (5, 6) Ethylenvinylacetat und/oder Polypropylen aufweist.

3. Filtermaterial nach einem der vorangehenden Ansprüche, **dadurch gekennzeichnet, dass** wenigstens eine der Netzschichten (5, 6) eine Grammatur im Bereich von 30 gr/m² bis 100 gr/m^{z} aufweist.

4. Filtermaterial nach einem der vorangehenden Ansprüche, **dadurch gekennzeichnet, dass** wenigstens eine der Netzschichten (5, 6) eine Grammatur im Bereich von 50 gr/m^{z} bis 70 gr/m² aufweist.

5. Filtermaterial nach einem der vorangehenden Ansprüche, **dadurch gekennzeichnet, dass** wenigstens eine der Netzschichten (5, 6) rautenförmige oder rechteckige Netzstrukturen aufweist.

6. Filtermaterial nach einem der vorangehenden Ansprüche, **dadurch gekennzeichnet, dass** die kürzere Diagonale der rautenförmigen Netzstrukturen Abmessungen von 1,5 mm bis 4 mm hat, und dass die längere Diagonale der rautenförmigen Netzstrukturen Abmessungen von 2,5 mm bis 6 mm hat.

7. Filtermaterial nach einem der vorangehenden Ansprüche, **dadurch gekennzeichnet, dass** die kürzere Diagonale der rautenförmigen Netzstrukturen Abmessungen von 2,0 mm bis 3 mm hat, und dass die längere Diagonale der rautenförmigen Netzstrukturen Abmessungen von 3,5 mm bis 4,5 mm hat.

8. Filtermaterial nach einem der vorangehenden Ansprüche, **dadurch gekennzeichnet, dass** in den Falten (3) zwei Lagen der Filtermateriallage (2) aufeinander liegen.

9. Filtermaterial nach einem der vorangehenden Ansprüche, **dadurch gekennzeichnet, dass** die zwei Lagen der Filtermateriallage (2) einseitig oder beidseitig aufeinander liegen.

10. Atemschutzmaske (10) mit einem Filtermaterial nach einem der Ansprüche 1 bis 9,
**dadurch gekennzeichnet, dass** auf der Innenseite der Falten (3) zwei benachbarte Lagen der Filtermateriallage (2) voneinander beabstandet sind.

11. Atemschutzmaske nach Anspruch 10, **dadurch gekennzeichnet, dass** auf der Außenseite der Falten (3) zwei Lagen der Filtermateriallage (2) aufeinander liegen.

12. Atemschutzmaske nach einem der Ansprüche 10 oder 11, **dadurch gekennzeichnet, dass** die Atemschutzmaske (10) auf ihrer Außenseite ein Maskengitter (9) aufweist.

13. Atemschutzmaske nach einem der Ansprüche 10 bis 12, **dadurch gekennzeichnet, dass** die Atemschutzmaske (10) auf ihrer Innenseite ein Maskenvlies (8) aufweist.

14. Atemschutzmaske nach einem der Ansprüche 12 oder 13, **dadurch gekennzeichnet, dass** das Maskengitter (9) und/oder das Maskenvlies (8) fest mit der Filtermateriallage (2) verbunden ist.

## Claims

1. Filter material (1) for a respirator mask, comprising a filter material ply (2) which is deposited so as to form a plurality of folds (3), the filter material ply (2) comprising a filter layer (4) and a first netting layer (5), and the filter material ply (2) comprising a second netting layer (6) on the side of the filter layer (4) opposite to said first netting layer (5), **characterised in that**, in a fold (3), two adjacent plies of the filter material ply (2) are in contact with each other on one side, such that a pocket (7) is formed between two adjacent folds (3).

2. Filter material according to claim 1, **characterised in that** at least one of the netting layers (5, 6) comprises ethylene vinyl acetate and/or polypropylene.

3. Filter material according to any of the preceding claims, **characterised in that** at least one of the netting layers (5, 6) has a grammage in the range from 30 g/m² to 100 g/m².

4. Filter material according any of the preceding claims, **characterised in that** at least one of the netting layers (5, 6) has a grammage in the range from 50 g/m² to 70 g/m².

5. Filter material according to any of the preceding claims, **characterised in that** at least one of the netting layers (5, 6) has rhombic or rectangular network structures.

6. Filter material according to any of the preceding claims, **characterised in that** the shorter diagonal of the rhombic network structures has dimensions from 1.5 mm to 4 mm, and **in that** the longer diagonal of the rhombic network structures has dimensions from 2.5 mm to 6 mm.

7. Filter material according to any of the preceding claims, **characterised in that** the shorter diagonal of the rhombic network structures has dimensions from 2.0 mm to 3 mm, and **in that** the longer diagonal of the rhombic network structures has dimensions from 3.5 mm to 4.5 mm.

8. Filter material according to any of the preceding claims, **characterised in that** in the folds (3), two plies of the filter material ply (2) are in contact with each other.

9. Filter material according to any of the preceding claims, **characterised in that** the two plies of the filter material ply (2) are in contact with each other on one side or on both sides.

10. Respirator mask (10) comprising a filter material according to any of claims 1 to 9, **characterised in that**, on the inner surface of the folds (3), two adjacent plies of the filter material ply (2) are spaced apart from each other.

11. Respirator mask according to claim 10, **characterised in that** on the outer surface of the folds (3), two adjacent plies of the filter material ply (2) are in contact with each other.

12. Respirator mask according to either claim 10 or claim 11, **characterised in that** the respirator mask (10) comprises a mask lattice (9) on the outer surface thereof.

13. Respirator mask according to any of claims 10 to 12, **characterised in that** the respirator mask (10) comprises a non-woven mask material (8) on the inner surface thereof.

14. Respirator mask according to either claim 12 or claim 13, **characterised in that** the mask lattice (9) and/or the non-woven mask material (8) are/is rigidly connected to the filter material ply (2).

## Revendications

1. Matériau filtrant (1) pour un masque respiratoire de protection comportant une couche de matériau filtrant (2) disposée en une pluralité de plis (3), dans lequel la couche de matériau filtrant (2) comporte un film de filtration (4) et un premier film réticulé (5), et dans lequel la couche de matériau filtrant (2) comporte un deuxième film réticulé (6) sur la face du film de filtration (4) opposée au premier film réticulé (5),
**caractérisé en ce que** deux couches adjacentes de la couche de matériau filtrant (2) se chevauchent d'un côté dans un pli (3) de telle sorte qu'une poche (7) est constituée entre deux plis adjacents (3).

2. Matériau filtrant selon la revendication 1, **caractérisé en ce qu'**au moins un des films réticulés (5, 6) comporte de l'éthylène-acétate de vinyle et/ou du polypropylène.

3. Matériau filtrant selon l'une des revendications précédentes, **caractérisé en ce qu'**au moins un des films réticulés (5, 6) présente une masse surfacique comprise entre 30 gr/m² et 100 gr/m².

4. Matériau filtrant selon l'une des revendications précédentes, **caractérisé en ce qu'**au moins un des films réticulés (5, 6) présente une masse surfacique comprise entre 50 gr/m² et 70 gr/m2.

5. Matériau filtrant selon l'une des revendications précédentes, **caractérisé en ce qu'**au moins un des films réticulés (5, 6) présente des structures réticulées rhombiques ou rectangulaires.

6. Matériau filtrant selon l'une des revendications précédentes, **caractérisé en ce que** la dimension de la diagonale la plus courte des structures réticulées rhombiques est comprise entre 1,5 mm et 4 mm, et **en ce que** la dimension de la diagonale la plus longue des structures réticulées rhombiques est comprise entre 2,5 mm et 6 mm.

7. Matériau filtrant selon l'une des revendications précédentes, **caractérisé en ce que** la dimension de la diagonale la plus courte des structures réticulées rhombiques est comprise entre 2,0 mm et 3 mm, et **en ce que** la dimension de la diagonale la plus longue des structures réticulées rhombiques est comprise entre 3,5 mm et 4,5 mm.

8. Matériau filtrant selon l'une des revendications précédentes, **caractérisé en ce que** deux couches de la couche de matériau filtrant (2) se chevauchent dans les plis (3).

9. Matériau filtrant selon l'une des revendications précédentes, **caractérisé en ce que** les deux couches de la couche de matériau filtrant (2) se chevauchent d'un côté ou des deux côtés.

10. Masque respiratoire de protection (10) comportant un matériau filtrant selon l'une des revendications 1 à 9,
**caractérisé en ce que** deux couches adjacentes de la couche de matériau filtrant (2) sont espacées entre elles sur la face interne des plis (3).

11. Masque respiratoire de protection selon la revendication 10, **caractérisé en ce que** deux couches de la couche de matériau filtrant (2) se chevauchent sur la face externe des plis (3).

12. Masque respiratoire de protection selon l'une des revendications 10 à 11, **caractérisé en ce que** le masque respiratoire de protection (10) comporte une grille de masque (9) sur sa face externe.

13. Masque respiratoire de protection selon l'une des revendications 10 à 12, **caractérisé en ce que** le masque respiratoire de protection (10) comporte une couche de masque en textile non-tissé (8) sur sa face interne.

14. Masque respiratoire de protection selon l'une des revendications 12 à 13, **caractérisé en ce que** la grille de masque (9) et/ou la couche de masque en textile non-tissé (8) est attachée de manière permanente à la couche de matériau filtrant (2).
